# EUROPÄISCHE PATENTSCHRIFT

(11) **EP 3 208 433 B1**
(45) Veröffentlichungstag und Bekanntmachung des Hinweises auf die Patenterteilung: **10.04.2019**
(21) Anmeldenummer: 16156677.3
(22) Anmeldetag: 22.02.2016
(51) Int. Cl.: F01D 25/28, F02C 7/20

(54) **TURBINENZWISCHENGEHÄUSE AUS KERAMISCHEN FASERVERBUND-WERKSTOFFEN**
MID TURBINE FRAME MADE FROM CERAMIC FIBER COMPOSITE MATERIALS
CARTER INTERMÉDIAIRE DE TURBINE EN MATIÈRE COMPOSITE À FIBRES CÉRAMIQUES

(43) Veröffentlichungstag der Anmeldung: 23.08.2017
(73) Patentinhaber: MTU Aero Engines AG, 80995 München (DE)
(72) Erfinder: Böck, Alexander, 82288 Kottgeisering (DE)

(56) Entgegenhaltungen:
- EP-A1- 2 412 929
- EP-A2- 2 584 152
- WO-A1-2015/157751

## Beschreibung

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union (*FP7*/*2007-2013*) für Clean Sky Joint Technology Initiative gefördert.

Die Erfindung betrifft ein Turbinenzwischengehäuse für eine Gasturbine gemäß Anspruch 1.

Turbinenzwischengehäuse von Gasturbinen, insbesondere Fluggasturbinen, dienen insbesondere dazu, die Abgase, welche die Hochdruckturbine verlassen, mit möglichst geringen aerodynamischen Verlusten an Strukturbauteilen und Leitungen vorbei in die Niederdruckturbine zu leiten. Ferner nimmt das Turbinenzwischengehäuse als tragende Struktur mindestens ein Lager der Welle der Hochdruckturbine auf. Ein Turbinenzwischengehäuse ist somit im Betrieb der Gasturbine hohen Belastungen ausgesetzt, insbesondere mechanischen und thermischen Belastungen.

Bei den mechanischen Beanspruchungen sind insbesondere Faktoren wie das Gewicht der eingesetzten Bauteile sowie deren strukturelle Verbindungen untereinander zu beachten. Bei herkömmlichen, insbesondere aus metallischen Materialien hergestellten Verkleidungselementen ist es beispielsweise üblich, die Außenwandelemente und die Innenwandelemente mittels der Strebenverkleidungselemente miteinander so zu verbinden, dass diese gesamte Struktur am Außengehäuse befestigt und abgestützt ist, wobei die Innenwandelemente an den Strebenverkleidungselementen befestigt sind, welche wiederum mit den Außenwandelementen verbunden sind. Dies führt zur Übertragung von mechanischen und auch thermischen Belastungen von den angesprochenen Bauteilen auf das Außengehäuse.

Ein Turbinenzwischengehäuse, das einzelne Bauteile aus CMC (ceramic matrix composite) umfasst, ist aus der WO 2015/157751 A1 bekannt.

Aufgabe der Erfindung ist es, ein Turbinenzwischengehäuse dahingehend zu verbessern, dass oben aufgeführte Nachteile vermieden werden können. Insbesondere soll erreicht werden, dass das Gewicht reduziert werden kann und dass die Übertragung von mechanischen bzw. thermischen Belastungen auf andere Bauteile vermindert werden kann.

Zur Lösung dieser Aufgabe wird vorgeschlagen, dass bei einem Turbinenzwischengehäuse die Außenwandelemente, die Innenwandelemente und die Strebenverkleidungselemente wenigstens teilweise aus keramischen Faserverbund-Werkstoffen hergestellt sind, wobei die Außenwandelemente derart ausgebildet sind, dass sie mit dem Außengehäuse gekoppelt sind, und wobei die Innenwandelemente derart ausgebildet sind, dass sie mit der ringförmigen Haltestruktur gekoppelt sind.

Durch den Einsatz von keramischen Faserverbund-Werkstoffen, die nachfolgend vereinfacht als CMC bezeichnet werden, kann gegenüber metallischen Bauteilen Gewicht eingespart werden. Allerdings ist dabei zu beachten, dass CMC-Bauteile verglichen mit metallischen Bauteilen wegen ihrer ungünstigen Versagenscharakteristik eine geringere nutzbare Festigkeit aufweisen, so dass insbesondere größere (flächige) Metallbauteile in kleinere CMC - Einheiten aufgeteilt werden sollten. Durch die im Zusammenhang mit der Verwendung von CMC für die Außenwandelemente bzw. die Innenwandelemente gewählte Kopplung an unterschiedlichen Bauteilen (Außengehäuse bzw. Haltestruktur) sind die Außenwandelemente bzw. die Innenwandelemente an unterschiedlichen Strukturbauteilen des Turbinenzwischengehäuses abgestützt. Dies verringert bzw. vermeidet die Übertragung von Lasten aus benachbarten Bauteilen des Turbinenzwischengehäuses bzw. der Gasturbine über die aus CMC hergestellten Außenwandelemente bzw. die Innenwandelemente.

Damit der Übertragung von Lasten weiter entgegengewirkt werden kann, weist wenigstens ein Teil der mehreren Außenwandelemente und wenigstens ein Teil der mehreren der Innenwandelemente Öffnungen auf, in denen radiale Enden der Strebenverkleidungselemente aufgenommen sind. Die Strebenverkleidungselemente sind mittels jeweiliger Verkleidungsdichtungsanordnungen schwimmend zwischen den Außenwandelementen und den Innenwandelementen gelagert.

Da die Außenwandelemente am Außengehäuse gekoppelt bzw. abgestützt sind und die Innenwandelemente an der ringförmigen Haltestruktur gekoppelt bzw. abgestützt sind, können die Strebenverkleidungselemente mit Spiel in den Verkleidungsöffhungen aufgenommen sein. Dies vermindert oder verhindert die Übertragung von Lasten zwischen den Außenwandelementen und den Innenwandelementen über die Strebenverkleidungselemente. Die Verkleidungsdichtungsanordnung dient dabei der Abdichtung des Strömungskanals in den Übergangsbereichen zwischen den Strebenverkleidungselementen und den jeweiligen Außenwandelementen und Innenwandelementen.

Es wird weiter vorgeschlagen, dass benachbarte Außenwandelemente mittels einer Außenwanddichtungsanordnung aneinander liegen und dass benachbarte Innenwandelemente mittels einer Innenwanddichtungsanordnung aneinander liegen. Die benachbarten Wandelemente (außen und innen) bilden in Umfangsrichtung jeweils einen im Wesentlichen geschlossenen äußeren bzw. inneren Ring, wobei jedes Wandelement einem Ringbogenabschnitt entspricht und wobei zwischen zwei Ringbogenabschnitten eine jeweilige Dichtungsanordnung vorgesehen ist, so dass der Ring aus Außenwandelementen und der Ring aus Innenwandelementen einen abgedichteten Strömungskanal begrenzen.

Es ist bevorzugt, dass die Verkleidungsdichtungsanordnung oder/und die Außenwanddichtungsanordnung oder/und die Innenwanddichtungsanordnung wenigstens einen Dichtungsstrang umfassen, wobei der Dichtungsstrang bevorzugt als Gewebeschlauch aus metallischen oder/und keramischen Materialien gefertigt ist. Hierzu wird weiterbildend vorgeschlagen, dass der Dichtungsstrang einen Gewebeschlauch mit einer elastischen oder/und deformierbaren Füllung umfasst, wobei die Füllung vorzugsweise aus sich in Längsrichtung des Dichtungsstrangs erstreckenden Keramikfasern gebildet ist. Alternativ kann die Füllung auch aus ungerichteten Keramikfasern oder Körnern gebildet sein. Der Dichtungsstrang ist an seinen Enden vorzugsweise verschlossen, insbesondere verschweißt oder vernäht. Solche Dichtungsstränge mit einer deformierbaren bzw. elastischen Füllung ermöglichen die Überbrückung von größeren Spalten an den Dichtungsstellen. Dies ermöglicht insbesondere auch die Überbrückung von fertigungsbedingten Toleranzen und von thermomechanischen Verschiebungen im Betrieb.

Es wird weiter vorgeschlagen, dass an den Strebenverkleidungselementen oder/und den Außenwandelementen oder/und den Innenwandelementen wenigstens eine der jeweiligen Dichtungsanordnung zugeordnete Vertiefung ausgebildet ist, in welcher der Dichtungsstrang aufgenommen ist. Dabei kann eine solche Vertiefung, die auch als Nut oder Dichtschale bezeichnet werden kann, bevorzugt U-förmig ausgebildet sein. Dabei ist die Dichtschale vorzugsweise integral mit dem Außenwandelement oder dem Innenwandelemente oder dem Strebenverkleidungselement ausgebildet. Ferner kann die Dichtschale bzw. Vertiefung derart dimensioniert werden, dass sie aus gebogenen durchlaufenden Keramikfasern gebildet werden kann, so dass die Festigkeit der Dichtschale bzw. Vertiefung verbessert werden kann. Der Dichtungsstrang kann einen Durchmesser bzw. Radius aufweisen, der in Abhängigkeit des Biegeradius von Keramikfasern der Dichtschale gewählt wird. Durch entsprechend gewählte Biegeradien bei den Keramikfasern der Dichtschale kann zur erwähnten verbesserten Festigkeit beitragen werden (durchlaufende gebogene ganze Fasern, keine angeschnittenen Fasern), wobei hierdurch gegebenenfalls entstehende größere Spalte zwischen den Bauteilen mittels des entsprechend dimensionierten Dichtungsstrangs mit deformierbarer bzw. nachgiebiger Füllung sicher abgedichtet werden können.

Es ist bevorzugt, dass im Bereich einer jeweiligen Vertiefung an wenigstens einem Rand der Vertiefung ein sich anschließender Flanschabschnitt ausgebildet ist. Betrachtet man eine solche Vertiefung in einer Lage, in der die Vertiefung im Wesentlichen horizontal ausgerichtet ist, so dass der Dichtungsstrang aufgrund der Schwerkraft in der Vertiefung bleiben würde, kann sich ein betreffender Flanschabschnitt entlang des Randes zusätzlich in vertikaler Richtung oder in horizontaler Richtung erstrecken. Anders ausgedrückt kann der Flanschabschnitt bezogen auf einen Querschnitt durch die Vertiefung als insbesondere parallele Verlängerung des Randes ausgebildet sein oder als insbesondere orthogonale Verlängerung des Randes ausgebildet sein.

Es wird ferner vorgeschlagen, dass mittels einer Außenwanddichtungsanordnung aneinander angeordnete Außenwandelemente mittels Flanschabschnitten gegeneinander abgestützt sind oder/und mittels einer Innenwanddichtungsanordnung aneinander angeordnete Innenwandelemente mittels Flanschabschnitten gegeneinander abgestützt sind oder/und mittels einer Verkleidungsdichtungsanordnung zwischen betreffenden Außenwandelementen und Innwandelementen aufgenommene Strebenverkleidungselemente mittels Flanschabschnitten an den jeweiligen Außenwandelementen und Innenwandelementen abgestützt sind. Weiter ist es bevorzugt, dass zwischen aneinander angeordneten Außenwandelementen oder/und zwischen aneinander angeordneten Innenwandelementen oder/und zwischen Strebenverkleidungselementen und ihren betreffenden Außenwandelementen und Innenwandelementen im Bereich der jeweiligen Außenwanddichtungsanordnung bzw. Innenwanddichtungsanordnung bzw. Verkleidungsdichtungsanordnung Dehnungsspalten ausgebildet sind. Die Flanschabschnitte an den verschiedenen Bauteilen ermöglichen insbesondere bei thermischer Ausdehnung bzw. damit verbundener mechanischer Verschiebung der Bauteile im Betrieb ein gegenseitiges Abstützen der Bauteile aneinander. Dabei können im Betrieb durch die thermisch-mechanischen Verschiebungen die Dehnspalten stark verengt werden, so dass benachbarte Bauteile, insbesondere mit entsprechenden Flanschabschnitte direkt in Kontakt miteinander kommen.

Um das Strebenverkleidungselement im Strömungskanal gegen insbesondere in Strömungsrichtung wirkende Druckkräfte in seiner Lage zu sichern, wird vorgeschlagen, dass in dem Aufnahmeraum eines Strebenverkleidungselements wenigstens ein in den Aufnahmeraum gerichtetes Abstützelement vorgesehen ist, derart, dass das Strebenverkleidungselement mittels des Abstützelements am Trägerelement abgestützt ist. Nimmt man vereinfacht an, dass die Strömungsrichtung im Wesentlichen axial entlang der Gasturbine verläuft, erstreckt sich das Abstützelement in axialer Richtung in den Aufnahmeraum des Strebenverkleidungselements hinein, so dass es in axialer Richtung am Trägerelement abgestützt ist.

Die Erfindung betrifft ferner eine Gasturbine, insbesondere Fluggasturbine, mit einem Turbinenzwischengehäuse, das wenigstens eines der oben beschriebenen Merkmale aufweist.

Nachfolgend wird die Erfindung unter Bezugnahme auf die anliegenden Figuren beispielhaft und nicht einschränkend anhand einer Ausführungsform beschrieben.

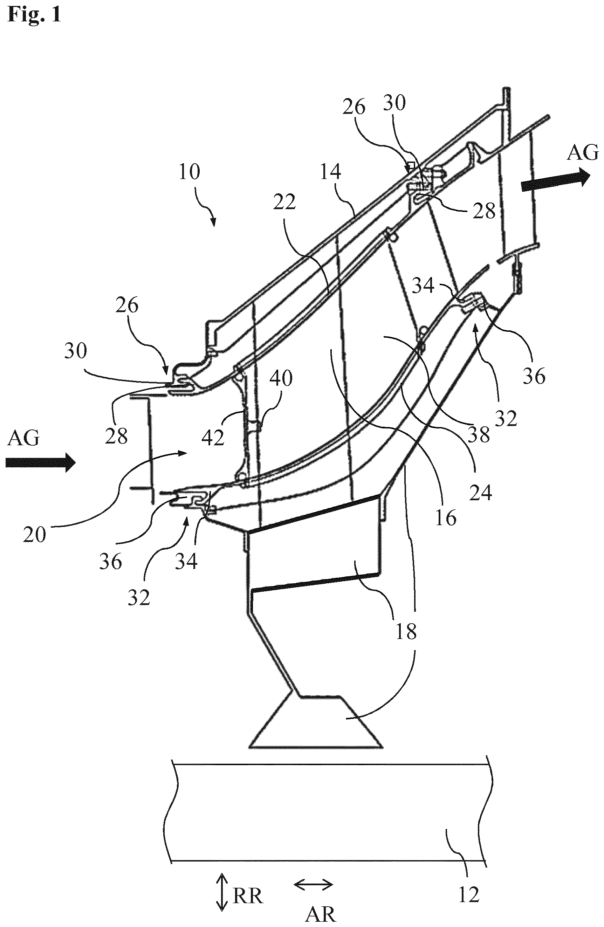

Figur 1 zeigt eine vereinfachte schematische Schnittdarstellung eines Turbinenzwischengehäuses 10, nachfolgend auch als TCF (turbine center frame) angesprochen. Das TCF 10 ist um eine in der Figur 1 nur schematisch angedeutete Welle 12 einer Gasturbine, insbesondere einer Fluggasturbine bzw. eines Mantelstromtriebwerks, angeordnet. Die Längserstreckung der Wellenanordnung 12 wird nachfolgend als axiale Richtung AR bezeichnet. Die hierzu orthogonale Richtung wird nachfolgend als radiale Richtung RR angesprochen.

Das Turbinenzwischengehäuse 10 umfasst radial außen liegend ein Außengehäuse 14. Dieses Außengehäuse 14 aus Metall ist mittels Trägerelementen 16 mit einer radial innenliegenden ringförmigen Haltestruktur 18 verbunden. Zwischen dem Außengehäuse 14 und der Haltestruktur 18 ist ein Strömungskanal 20 vorgesehen, durch den heiße Abgase, insbesondere von der Hochdruckturbine zur Niederdruckturbine strömen können, was durch die beiden Pfeile AG angedeutet ist. Der Strömungskanal 20 wird durch mehrere in Umfangsrichtung benachbarte und in radialer Richtung außen liegende Außenwandelemente 22 und durch mehrere in Umfangsrichtung benachbarte, in radialer Richtung innen liegende Innenwandelemente 24 begrenzt.

Die Außenwandelemente 22 sind mittels geeigneter Verbindungsanordnungen 26 mit dem Außengehäuse 14 verbunden. Im vorliegenden Beispiel weisen die Außenwandelemente 22 an ihren beiden axialen Enden hakenartige Vorsprünge 28 auf, die in Eingriff stehen mit korrespondierenden Gegenstücken 30 des Außengehäuses 14.

Die Innenwandelemente 24 sind mittels geeigneter Verbindungsanordnungen 32 mit der ringförmigen Haltestruktur 18 verbunden. Die Innenwandelemente 24 weisen an ihren axialen Enden hakenartige Vorsprünge 34 auf, die in entsprechende Gegenstücke 36 der Haltestruktur 18 aufgenommen sind.

Wie aus der Figur 1 ersichtlich, erstrecken sich die Trägerelemente 16, die auch als Stützstreben bzw. Streben bezeichnet werden können, in im Wesentlichen radialer Richtung durch den Strömungskanal 20 sowie ein jeweiliges betreffendes Innenwandelement 24 und Außenwandelement 22 hindurch. Um den Abgasstrom AG um die Trägerelemente 16 im Strömungskanal 20 herumzuführen, sind zwischen betreffenden Außenwandelementen 22 und Innenwandelementen 24 Strebenverkleidungselemente 38 vorgesehen, die die Trägerelemente 16 im Bereich des Strömungskanals 20 umgeben bzw. verkleiden und dabei vorzugsweise ein aerodynamisch optimiertes Strömungsprofil aufweisen. Die Strebenverkleidungselemente 38 sind dabei in jeweilige Öffnungen in den Außenwandelementen 22 bzw. den Innenwandelementen 24 aufgenommen, wobei die Strebenverkleidungselemente zwischen den betreffenden Außenwandelementen 22 und den betreffenden Innenwandelementen 24 schwimmend gelagert sind. Ferner weisen die Strebenverkleidungselemente 38 bezogen auf die Strömungsrichtung des Abgases AG an ihrem axial vorderen Ende einen Vorsprung 40 auf, welcher sich insbesondere in axialer Richtung AR in den Aufnahmeraum für das Trägerelement 16 erstreckt und sich am Trägerelement 16 abstützt. Dieser axiale Anschlag 40 sichert die Relativposition des Strebenverkleidungselements 38 zum Trägerelement 16 im Betrieb, wenn aufgrund des heißen Abgases AG Druckkräfte auf eine axiale vordere Seite 42 des Strebenverkleidungselements 38 wirken.

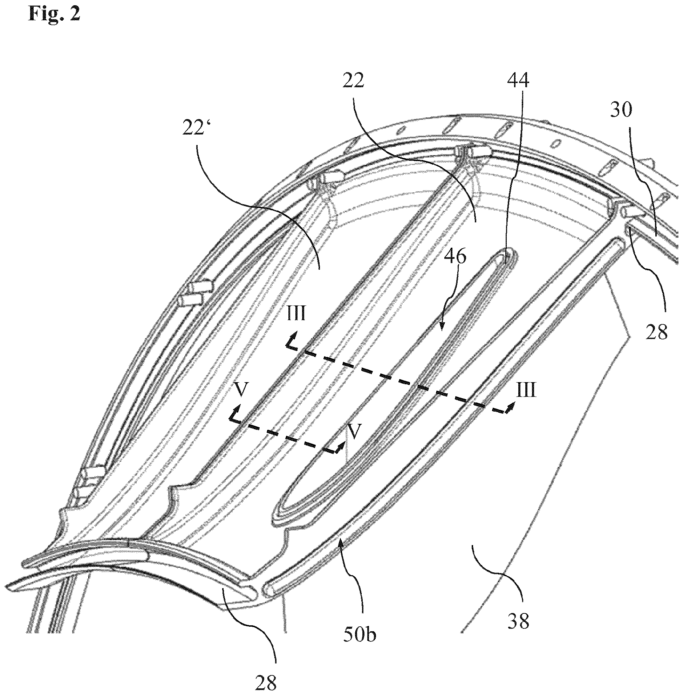

Figur 2 zeigt in einer schematischen perspektivischen Teildarstellung ein Außenwandelement 22 und ein in eine Öffnung 44 des Außenwandelements 22 eingesetztes Strebenverkleidungselement 38. Aus dieser Darstellung der Figur 2 ist auch der durch das Strebenverkleidungselement 38 gebildete Aufnahmeraum 46 ersichtlich, durch den sich das Trägerelement 16 hindurch erstrecken kann (Fig. 1). Wie bereits unter Bezugnahme auf die Figur 1 angedeutet, weist das Außenwandelement 22 in seinem axial vorderen Bereich (bezogen auf die Strömungsrichtung vom Abgas) den hakenartigen Befestigungsabschnitt 28, wobei in der Figur 2 kein entsprechendes Gegenstück 30 des Außengehäuses 14 (Figur 1) dargestellt ist. Das axial hintere Ende der Aufnahmeplatte 22 weist ein weiteres hakenartiges Befestigungselement 28 auf, das mit einem entsprechenden Gegenstück 30 des Außengehäuses verbunden ist.

Das hier beispielhaft für ein Außenwandelement 22 Erläuterte gilt in analoger Weise auch für ein Innenwandelement 24, auch wenn ein solches nicht in einer entsprechenden Darstellung in der vorliegenden Anmeldung enthalten ist. Auch die Innenwandelemente 24 verfügen über eine zur Öffnung 44 analoge Öffnung, in welche ein radial unteres Ende des Strebenverkleidungselements 38 aufgenommen werden kann.

In Bezug auf die Figur 2 wird noch darauf hingewiesen, dass von den in Umfangsrichtung benachbarten Außenwandelementen 22, nicht jedes über eine Öffnung 44 verfügt bzw. verfügen muss, da es in der Regel weniger Trägerelemente 16 gibt als Außenwandelemente 22 und Innenwandelemente 24. Dies wird insbesondere auch dadurch gezeigt, dass es ein Außenwandelement 22' gibt, in dem keine Öffnung 44 vorgesehen ist.

Die Außenwandelemente 22, die Innenwandelemente 24 und die Strebenverkleidungselemente 38 sind teilweise oder vollständig aus keramischen Faserverbundwerkstoffen (CMC) hergestellt. Wie bereits einleitend erwähnt worden ist, verfügen solche CMC -Bauteile aufgrund ihrer ungünstigen Versagenscharakteristik über eine geringere nutzbare Festigkeit verglichen mit konventionellen Metallbauteilen, die bis anhin für Turbinenzwischengehäuse eingesetzt worden sind. Daher werden für die Ausgestaltung des Strömungskanals 20 mehr Außenwandelemente 22 aus CMC benötigt, damit jedes einzelne Außenwandelement und die Außenwand insgesamt den thermisch-mechanischen Belastungen standhalten kann. Dies gilt in analoger Weise auch für die Innenwandelemente 24 und die hieraus gebildete Innenwand des Strömungskanals 20.

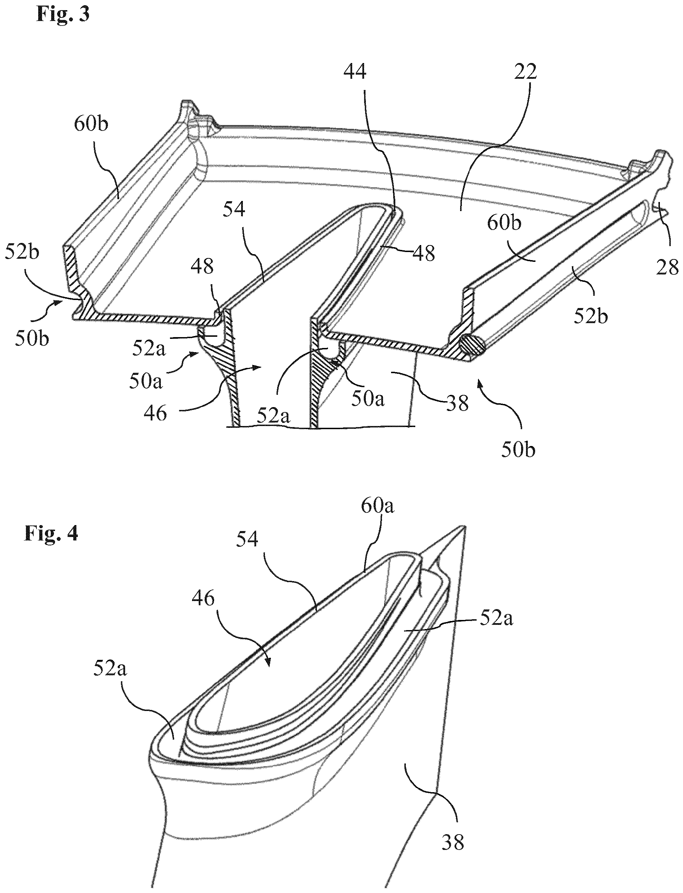

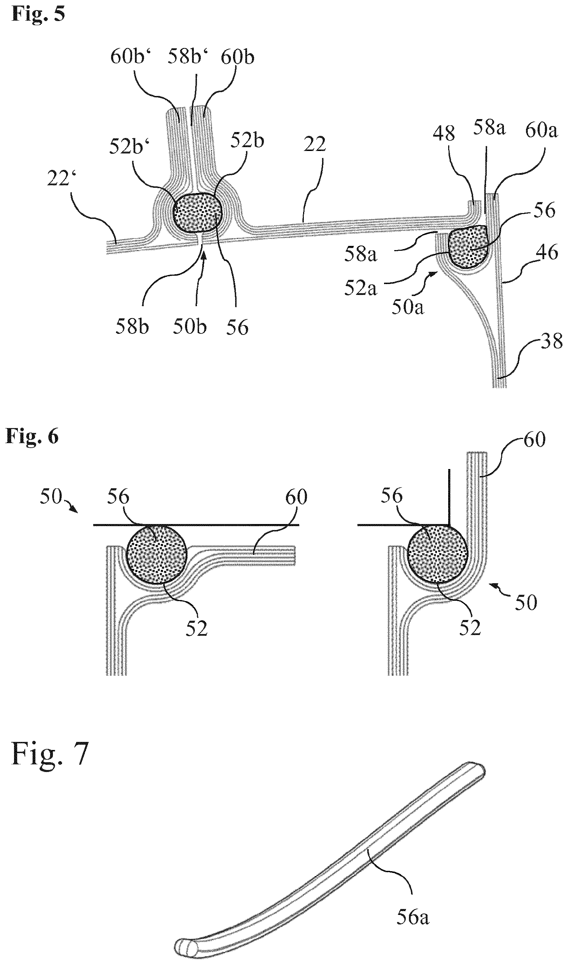

Figur 3 zeigt eine teilgeschnittene schematische Perspektivdarstellung des Außenwandelements 22 und dem darin aufgenommenen Strebenverkleidungselement 38 etwa entlang einer Schnittlinie III-III der Figur 2. Das Strebenverkleidungselement 38 ist in der Öffnung 44 des Außenwandelements 22 aufgenommen. Die Öffnung 44 kann vorzugsweise durch einen in radiale Richtung weisenden Wulst oder flanschartigen Abschnitt 48 begrenzt sein. Das Strebenverkleidungselement 38 und das Außenwandelement 22 sind mittels einer Verkleidungsdichtungsanordnung 50a gegeneinander abgestützt und abgedichtet. Die Verkleidungsdichtungsanordnung 50a umfasst eine am Strebenverkleidungselement 38 ausgebildete Vertiefung 52a. Die Vertiefung 52a ist vorzugsweise im Querschnitt U-förmig bzw. halbkreisförmig oder bogenförmig ausgestaltet. Im Falle des Strebenverkleidungselements 38 ist die Vertiefung 52a durchgehend um eine den Aufnahmeraum 46 begrenzende Wandung 54 angeordnet. In die Vertiefung 52a kann zur Abdichtung des Übergangs zwischen Strebenverkleidungselement 38 und Außenwandelement 22 ein Dichtungsstrang 56 eingelegt werden, der beispielhaft aus der Figur 7 schematisch ersichtlich ist. Ein solcher Dichtungsstrang ist bevorzugt als Gewebeschlauch ausgeführt mit einer nachgiebigen bzw. deformierbaren Füllung. Die Füllung kann aus in Längsrichtung des Dichtungsstrangs 56 ausgerichteten Keramikfasern gebildet sein. Alternativ kann die Füllung auch ungerichtete kürzere Keramikfasern enthalten oder eine Art Keramikkörner oder Keramikgranulat. Der Gewebeschlauch kann aus einem keramischen Gewebe oder einem metallischen Gewebe hergestellt sein.

Die in Bezug auf die Figur 3 beschriebene Dichtungsanordnung 50a zwischen dem Strebenverkleidungselement 38 und dem Außenwandelement 22 kann in analoger Weise zwischen dem Strebenverkleidungselement 38 und dem Innenwandelement 24 ausgeführt sein. Dreht man die Figur 3 vor sich liegend um 180° in der Zeichenebene, so dass die Figur 3 auf dem Kopf steht, könnte sie auch als Prinzipdarstellung für die Anordnung des Strebenverkleidungselements 38 an einem Innenwandelement 24 angesehen werden.

Die Figur 4 zeigt den radial oberen Bereich des Strebenverkleidungselements 38 in vereinfachter Perspektivdarstellung. Ersichtlich sind die Vertiefung 52a sowie die den Aufnahmeraum 46 begrenzende Wandung 54. Aus der Figur 4 ist auch die möglichst stromlinienförmige Ausgestaltung des Strebenverkleidungselements 38 ersichtlich, so dass es mit möglichst wenig Widerstand von heißem Abgas im Strömungskanal umströmt werden kann.

Figur 5 zeigt eine vereinfachte und schematische Schnittdarstellung etwa entsprechend der Schnittlinie V-V der Figur 2. In Figur 5 ist eine Außenwanddichtungsanordnung 50b ersichtlich, welche zwischen den benachbarten Außenwandelementen 22 und 22' vorgesehen ist. Eine solche Außenwanddichtungsanordnung 50b ist auch teilweise in der Figur 3 ersichtlich und mit den gleichen Bezugszeichen gekennzeichnet. Die Dichtungsanordnung 50b umfasst eine im Außenwandelement 22 bzw. im Außenwandelement 22' ausgebildete Vertiefung 52b, bzw. 52b', wobei auch diese Vertiefung 52b, 52b' im Querschnitt im Wesentlich U-förmig bzw. halbkreisförmig oder bogenförmig ausgebildet ist. In die Vertiefung 52b, 52b' ist ein Dichtungsstrang 56 (Figur 7) aufgenommen, so dass die beiden Außenwandelemente 22, 22' mittels der Dichtungsanordnung 50b gegeneinander abgestützt und abgedichtet sind. In der Figur 5 ist auf der rechten Seite auch die Verkleidungsdichtungsanordnung 50a ersichtlich mit der am Strebenverkleidungselement 38 vorgesehenen Vertiefung 52a und dem darin aufgenommenen Dichtungsstrang 56. Auf dem Dichtungsstrang 56 der Verkleidungsdichtungsanordnung 50a liegt das Außenwandelement 22 mit dem Randbereich 48, der Öffnung 44 auf. Aus der Figur 5 ist ferner ersichtlich, dass zwischen angrenzenden Außenwandelementen 22, 22' bzw. zwischen dem Außenwandelement 22 und dem Strebenverkleidungselement 38 Dehnungsspalten 58a bzw. 58b ausgebildet sind.

Figur 6 ist eine verallgemeinerte Form der Darstellung einer Vertiefung 52 mit darin aufgenommenem Dichtungsstrang 56. Die Vertiefungen 52 weisen in Figur 6 jeweils an ihrem rechten Rand einen Flanschabschnitt 60 auf, der dazu dienen kann, im Bereich der Dichtungsanordnung 50 wirkende Kräfte von benachbarten Bauteilen abzustützen. Die Ausgestaltung mit einem abgewinkelten Flanschabschnitt 60 gemäß der linken Seite der Figur 6 ist beispielsweise auch für die Flanschabschnitte 60b bzw. 60b' der Außenwandelemente 22 bzw. 22' der Figur 5 umgesetzt. Eine Konstellation entsprechend der rechten Seite der Figur 6 mit zum Rand der Vertiefung 52 parallelem Flanschabschnitt 60, welcher den Rand erhöht bzw. verlängert ist beispielsweise beim Strebenverkleidungselement 38 als Flanschabschnitt 60a umgesetzt.

Der Flanschabschnitt 60a des Strebenverkleidungselements 38 ist, wie dies aus Figur 4 ersichtlich ist, umlaufend um den Aufnahmeraum 46 angeordnet. Somit kann der Flans chabschnitt 60a in im Wesentlichen radialer Richtung mit Spiel (Dehnungsspalt 58a) in die Öffnung 44 des Außenwandelements 22 aufgenommen werden. Der Flanschabschnitt 60a kann sich bei mechanisch-thermischer Belastung und damit verbundener Ausdehnung der miteinander verbundenen Bauteile am Wulst bzw. Flanschabschnitt 48 der Öffnung 44 abstützen, so dass das Strebenverkleidungselement 38 und das Außenwandelement 22 in diesem Bereich aneinander abgestützt sind und insgesamt eine stabilisierende Wirkung erreicht wird.

Die Flanschabschnitte 60b bzw. 60b' weisen zwischen sich die Dehnungsspalte 58b auf und können bei mechanisch-thermischer Belastung und unter Ausdehnung der Außenwandelemente 22 bzw. 22' aneinander anliegen, um die auftretenden Kräfte abzustützen. Die Flanschabschnitte 60b bzw. 60b' wirken auch als Verstärkungsrippen, welche dem Außenwandelement 22 bzw. 22' mehr Stabilität geben.

Wie oben bereits zur Figur 3 erwähnt, könnte auch die Figur 5 in der Zeichenebene um 180° gedreht werden, so dass sie auf dem Kopf steht, wodurch man ein Prinzipbild für die Situation bei Innenwandelementen bekommen könnte.

Wie aus den Figuren 5 und 6 ersichtlich ist, sind für die Außenwandelemente 22, 22' bzw. das Strebenverkleidungselement 38 durch die dünnen schwarzen Linien die bevorzugten Lagen der Fasergewebe der Keramikfasern der CMC-Bauteile dargestellt. Es wird insbesondere darauf hingewiesen, dass alle Vertiefungen 52 (Figur 6), 52a und 52b (Figur 5) durch gebogene Keramikfasern gebildet werden können. Da Keramikfasern nicht mit beliebig kleinen Radien gebogen werden können, weisen alle Vertiefungen einen relativ großen Krümmungsradius auf. Der in den Vertiefungen ausgenommene Dichtungsstrang 56 weist einen Radius bzw. Durchmesser auf, der etwa dem Radius der Vertiefung entspricht, so dass der Dichtungsstrang 56 satt in der Vertiefung 52 aufgenommen ist. Da der Dichtungsstrang 56 in Querrichtung deformierbar ist, können zwischen den Außenwandelementen 22, bzw. zwischen den Innenwandelementen 24 bzw. zwischen den Strebenverkleidungselementen und den Wandelementen vorhandene Fertigungstoleranzen bzw. notwendiges Spiel dennoch ausreichend und sicher abgedichtet werden (siehe beispielsweise deformiert dargestellter Dichtungsstrang 56 der Dichtungsanordnung 50a in Figur 5). Die eingesetzten Dichtungsstränge passen sich in ihrer Form den thermisch-mechanischen Gegebenheiten an, wenn sich die unterschiedlichen Bauteile im Betrieb der Gasturbine ausdehnen.

Durch die Verwendung von CMC für die Außenwandelemente 22, die Innenwandelemente 24 und die Strebenverkleidungselemente 38 kann Gewicht eingespart werden verglichen mit einer herkömmlichen Metallbauweise sowie höhere Gastemperaturen gefahren werden. Da zur Bildung der gesamten Außenwand bzw. der gesamten Innenwand mehr einzelne Außenwandelemente bzw. Innenwandelemente aneinander angeordnet und gegenseitig abgedichtet werden müssen, können die deformierbaren Dichtungsstränge mit relativ großem Durchmesser vorteilhaft eingesetzt werden.

Durch die gemäß den Figuren 5 und 6 angedeuteten Faserverläufe bzw. Gewebelagen, insbesondere im Bereich der Vertiefungen, können solche Vertiefungen bzw. Dichtungsschalen ohne mechanische Nacharbeit in einem Schritt mit dem gesamten CMC-Bauteil (Außenwandelement 22, Innenwandelement 24, Strebenverkleidungselement 38) hergestellt werden. Hierdurch kann die bei CMC-Bauteilen auftretende Problematik der Nichtanwendbarkeit von elektrischen bzw. elektrochemischen Abtrage-Verfahren vermieden werden.

Insgesamt ergibt sich ein neuartiges Konzept des Aufbaus von Verkleidungselementen mit Außenwandelementen, Innenwandelementen und Strebenverkleidungselementen aus keramischen Faserverbund-Werkstoffen im Zusammenspiel mit einer veränderten Befestigung von Außenwandelementen und Innenwandelementen an den tragenden Strukturen des Turbinenzwischengehäuses. Die gewählte Konstruktion, bei der die Außenwandelemente am Außengehäuse befestigt sind, die Innenwandelemente an der ringförmigen Haltestruktur befestigt sind und die Strebenverkleidungselemente schwimmend zwischen betreffenden Außenwandelementen und betreffenden Innenwandelementen aufgenommen sind, ermöglicht es, die Übertragung von Lasten aus benachbarten Bauteilen über die CMC-Bauteile (Außenwandelemente, Innenwandelemente, Strebenverkleidungselemente) zu vermeiden. Dies führt insgesamt zu einer geringeren mechanischen Belastung dieser CMC-Bauteile des Turbinenzwischengehäuses.

### Bezugszeichenliste

- 10: Turbinenzwischengehäuse
- 12: Wellenanordnung
- 14: Außengehäuse
- 16: Trägerelement
- 18: Haltestruktur
- 20: Strömungskanal
- 22: Außenwandelement
- 24: Innenwandelement
- 26: Verbindungsanordnung
- 28: Hakenartiger Vorsprung
- 30: Gegenstück
- 32: Verbindungsanordnung
- 34: Hakenartiger Vorsprung
- 36: Gegenstück
- 38: Strebenverkleidungselement
- 40: Anschlag
- 42: axiale vordere Seite
- 44: Öffnung
- 46: Aufnahmeraum
- 48: flanschartiger Abschnitt
- 50a: Verkleidungsdichtungsanordnung
- 50b: Außenwanddichtungsanordnung
- 52a/b: Vertiefung
- 54: Wandung
- 56: Dichtungsstrang
- 58a/b: Dehnungsspalt
- 60a/b: Flanschabschnitt

## Patentansprüche

1. Turbinenzwischengehäuse (10) für eine Gasturbine, insbesondere eine Fluggasturbine, umfassend:
mehrere in Umfangsrichtung aufeinanderfolgend angeordnete Außenwandelemente (22);
mehrere in Umfangsrichtung aufeinanderfolgend angeordnete Innenwandelemente (24), wobei die Außenwandelemente (22) und die Innenwandelemente (24) durch die einander zugewandten Innenseiten einen Strömungskanal (20) für Abgas begrenzen;
mehrere in radialer Richtung (RR) zwischen einem betreffenden Außenwandelement (22) und einem betreffenden Innenwandelement (24) angeordnete Strebenverkleidungselemente (38),
ein die Außenwandelemente (22) und die Innenwandelemente (24) umgebendes Außengehäuse (14), und
eine ringförmige Haltestruktur (18), die einen Lagerbereich einer Welle (12) der Gasturbine, insbesondere der Welle der Hochdruckturbine umgibt,
wobei die Strebenverkleidungselemente (38) derart ausgebildet sind, dass sie einen Aufnahmeraum (46) aufweisen zur Aufnahme von Trägerelementen (16), die sich von der ringförmigen Haltestruktur (18) in im Wesentlichen radialer Richtung (RR) zu dem Außengehäuse (14) durch den Strömungskanal (20) hindurch erstrecken, so dass durch den Strömungskanal (20) strömendes Abgas durch die Strebenverkleidungselemente (38) um die Trägerelemente (16) herum geleitet wird, wobei
die Außenwandelemente (22), die Innenwandelemente (24) und die Strebenverkleidungselemente (38) wenigstens teilweise aus keramischen Faserverbund-Werkstoffen (CMC) hergestellt sind,
wobei die Außenwandelemente (22) derart ausgebildet sind, dass sie mit dem Außengehäuse (14) gekoppelt sind, und
wobei die Innenwandelemente (24) derart ausgebildet sind, dass sie mit der ringförmigen Haltestruktur (18) gekoppelt sind, wobei wenigstens ein Teil der mehreren Außenwandelemente (22) und wenigstens ein Teil der mehreren Innenwandelemente (24) Verkleidungsöffnungen (44) aufweist, in denen radiale Enden (54, 60a) der Strebenverkleidungselemente (38) aufgenommen sind, **dadurch gekennzeichnet, dass** die Strebenverkleidungselemente (38) mittels jeweiliger Verkleidungsdichtungsanordnungen (50a) schwimmend zwischen den Außenwandelementen (22) und den Innenwandelementen (24) gelagert sind.

2. Turbinenzwischengehäuse nach Anspruch 1, **dadurch gekennzeichnet, dass** benachbarte Außenwandelemente (22, 22') mittels einer Außenwanddichtungsanordnung (50b) aneinander liegen und dass benachbarte Innenwandelemente (24) mittels einer Innenwanddichtungsanordnung aneinander liegen.

3. Turbinenzwischengehäuse nach Anspruch 1 oder 2, **dadurch gekennzeichnet, dass** die Verkleidungsdichtungsanordnung (50a) oder/und die Außenwanddichtungsanordnung (50b) oder/und die Innenwanddichtungsanordnung wenigstens einen Dichtungsstrang (56) umfassen, wobei der Dichtungsstrang (56) bevorzugt als Gewebeschlauch aus metallischen oder/und keramischen Materialien gefertigt ist.

4. Turbinenzwischengehäuse nach Anspruch 3, **dadurch gekennzeichnet, dass** der Dichtungsstrang (56) einen Gewebeschlauch mit einer elastischen oder/und deformierbaren Füllung umfasst, wobei die Füllung vorzugsweise aus sich in Längsrichtung des Dichtungsstrangs erstreckenden Keramikfasern gebildet ist.

5. Turbinenzwischengehäuse nach Anspruch 3 oder 4, **dadurch gekennzeichnet, dass** an den Strebenverkleidungselementen (38) oder/und den Außenwandelementen (22) oder/und den Innenwandelementen (24) wenigstens eine der jeweiligen Dichtungsanordnung (50a; 50b) zugeordnete Vertiefung (52a, 52b) ausgebildet ist, in welcher der Dichtungsstrang (56) aufgenommen ist.

6. Turbinenzwischengehäuse nach Anspruch 5, **dadurch gekennzeichnet, dass** im Bereich einer jeweiligen Vertiefung (52a; 52b) an wenigstens einem Rand der Vertiefung (52a, 52b) ein sich anschließender Flanschabschnitt (60; 60a; 60b) ausgebildet ist.

7. Turbinenzwischengehäuse nach Anspruch 6, **dadurch gekennzeichnet, dass** mittels einer Außenwanddichtungsanordnung (50b) aneinander angeordnete Außenwandelemente (22) mittels Flanschabschnitten (60b) gegeneinander abgestützt sind oder/und mittels einer Innenwanddichtungsanordnung aneinander angeordnete Innenwandelemente mittels Flanschabschnitten gegeneinander abgestützt sind oder/und
mittels einer Verkleidungsdichtungsanordnung (50a) zwischen betreffenden Außenwandelementen (22) und Innwandelementen (24) aufgenommene Strebenverkleidungselemente (38) mittels Flanschabschnitten (60a, 48) an den jeweiligen Außenwandelementen (22) und Innenwandelementen (24) abgestützt sind.

8. Turbinenzwischengehäuse nach einem der vorhergehenden Ansprüche, **dadurch gekennzeichnet, dass** zwischen aneinander angeordneten Außenwandelementen (22) oder/und zwischen aneinander angeordneten Innenwandelementen (24) oder/und zwischen Strebenverkleidungselementen (38) und ihren betreffenden Außenwandelementen (22) und Innenwandelementen (24) im Bereich der jeweiligen Außenwanddichtungsanordnung (50b) bzw. Innenwanddichtungsanordnung bzw. Verkleidungsdichtungsanordnung (50a) Dehnungsspalten (58a; 58b, 58b') ausgebildet sind.

9. Turbinenzwischengehäuse nach einem der vorhergehenden Ansprüche, **dadurch gekennzeichnet, dass** in dem Aufnahmeraum (46) eines Strebenverkleidungselements (38) wenigstens ein in den Aufnahmeraum gerichtetes Abstützelement (40) vorgesehen ist, derart, dass das Strebenverkleidungselement (38) mittels des Abstützelements (40) am Trägerelement abgestützt (16) ist.

10. Gasturbine, insbesondere Fluggasturbine, mit einem Turbinenzwischengehäuse (10) nach einem der vorhergehenden Ansprüche.

## Claims

1. Intermediate turbine casing (10) for a gas turbine, in particular an aircraft gas turbine, comprising:
a plurality of outer wall elements (22) arranged consecutively in the circumferential direction;
a plurality of inner wall elements (24) arranged consecutively in the circumferential direction, the outer wall elements (22) and the inner wall elements (24) defining a flow channel (20) for exhaust gas by means of the mutually facing inner sides;
a plurality of strut fairing elements (38) arranged in the radial direction (RR) between a particular outer wall element (22) and a particular inner wall element (24),
an outer casing (14) which surrounds the outerwall elements (22) and the innerwall elements (24), and
an annular retaining structure (18) which surrounds a mounting region for a shaft (12) of the gas turbine, in particular the shaft of the high-pressure turbine,
the strut fairing elements (38) being designed such that they have a receiving space (46) for receiving bearing elements (16) which extend substantially in the radial direction (RR) from the annular retaining structure (18) to the outer casing (14) through the flow channel (20) such that exhaust gas flowing through the flow channel (20) is guided around the bearing elements (16) by the strut fairing elements (38),
the outer wall elements (22), the inner wall elements (24) and the strut fairing elements (38) being produced at least in part from ceramic matrix composites (CMC),
the outer wall elements (22) being designed such that they are coupled to the outer casing (14), and
the inner wall elements (24) being designed such that they are coupled to the annular retaining structure (18), at least some of the plurality of outer wall elements (22) and at least some of the plurality of inner wall elements (24) having fairing openings (44) in which radial ends (54, 60a) of the strut fairing elements (38) are received, **characterized in that** the strut fairing elements (38) are floatingly mounted between the outer wall elements (22) and the inner wall elements (24) by means of respective fairing seal arrangements (50a).

2. Intermediate turbine casing according to claim 1, **characterized in that** adjacent outer wall elements (22, 22') abut one another by means of an outer wall seal arrangement (50b) and **in that** adjacent inner wall elements (24) abut one another by means of an inner wall seal arrangement.

3. Intermediate turbine casing according to either claim 1 or claim 2, **characterized in that** the fairing seal arrangement (50a) and/or the outer wall seal arrangement (50b) and/or the inner wall seal arrangement comprise at least one sealing strip (56), the sealing strip (56) preferably being produced as a braided tube made of metal and/or ceramic materials.

4. Intermediate turbine casing according to claim 3, **characterized in that** the sealing strip (56) comprises a braided tube having a resilient and/or deformable filling, the filling preferably being made from ceramic fibers extending in the longitudinal direction of the sealing strip.

5. Intermediate turbine casing according to either claim 3 or claim 4, **characterized in that** at least one recess (52a, 52b) associated with the particular seal arrangement (50a; 50b) is formed on the strut fairing elements (38) and/or the outer wall elements (22) and/or the inner wall elements (24), in which recess the sealing strip (56) is received.

6. Intermediate turbine casing according to claim 5, **characterized in that** an adjoining flange portion (60; 60a; 60b) is formed in the region of each recess (52a; 52b) at at least one edge of the recess (52a, 52b).

7. Intermediate turbine casing according to claim 6, **characterized in that** outer wall elements (22), arranged beside one another by means of an outer wall seal arrangement (50b), are supported against one another by means of flange portions (60b), and/or inner wall elements, arranged beside one another by means of an inner wall seal arrangement, are supported against one another by means of flange portions, and/or strut fairing elements (38), received by means of a fairing seal arrangement (50a) between particular outer wall elements (22) and inner wall elements (24), are supported against the respective outer wall elements (22) and inner wall elements (24) by means of flange portions (60a, 48).

8. Intermediate turbine casing according to any of the preceding claims, **characterized in that** expansion gaps (58a; 58b; 58b') are formed between outer wall elements (22) arranged beside one another and/or between inner wall elements (24) arranged beside one another and/or between strut fairing elements (38) and the particular outer wall elements (22) and inner wall elements (24) thereof in the region of the particular outer wall seal arrangement (50b) or inner wall seal arrangement or fairing seal arrangement (50a).

9. Intermediate turbine casing according to any of the preceding claims, **characterized in that** at least one support element (40) directed into the receiving space is provided in the receiving space (46) of a strut fairing element (38) such that the strut fairing element (38) is supported on the bearing element (16) by means of the support element (40).

10. Gas turbine, in particular an aircraft gas turbine, comprising an intermediate turbine casing (10) according to any of the preceding claims.

## Revendications

1. Carter intermédiaire de turbine (10) pour turbine à gaz, en particulier turbine à gaz d'aéronef, comprenant :
une pluralité d'éléments de paroi extérieure (22) agencés successivement de manière circonférentielle ;
une pluralité d'éléments de paroi intérieure (24) disposés successivement de manière circonférentielle, les éléments de paroi extérieure (22) et les éléments de paroi intérieure (24) délimitant au moyen des côtés internes opposés un canal d'écoulement (20) pour les gaz d'échappement ;
une pluralité d'éléments de carénage de support (38) agencés dans la direction radiale (RR) entre un élément de paroi extérieure (22) respectif et un élément de paroi intérieure (24) respectif,
un carter extérieur (14) entourant les éléments de paroi extérieure (22) et les éléments de paroi intérieure (24), et
une structure de support annulaire (18) qui entoure une zone de stockage d'un arbre (12) de la turbine à gaz, en particulier de l'arbre de la turbine haute pression,
les éléments de carénage de support (38) étant formés de telle sorte qu'ils présentent un espace de logement (46) pour loger des éléments porteurs (16) qui s'étendent depuis la structure de support annulaire (18) dans une direction sensiblement radiale (RR) jusqu'au carter extérieur (14) à travers le canal d'écoulement (20), de sorte que les gaz d'échappement sont guidés à travers le canal d'écoulement (20) autour des éléments porteurs (16) par les éléments de carénage de support (38),
les éléments de paroi extérieure (22), les éléments de paroi intérieure (24) et les éléments de carénage de support (38) étant constitués au moins en partie de matériaux composites à fibres céramiques (CMC),
les éléments de paroi extérieure (22) étant formés de telle sorte que qu'ils sont couplés au carter extérieur (14), et
les éléments de paroi intérieure (24) étant formés de telle sorte qu'ils sont couplés à la structure de support annulaire (18), au moins une partie de la pluralité d'éléments de paroi extérieure (22) et au moins une partie de la pluralité d'éléments de paroi intérieure (24) présentant des ouvertures de carénage (44) dans lesquelles sont logées les extrémités radiales (54, 60a) des éléments de carénage de support (38), **caractérisé en ce que** les éléments de carénage de support (38) sont stockés de manière flottante entre les éléments de paroi extérieure (22) et les éléments de paroi intérieure (24) au moyen de dispositifs d'étanchéité de carénage (50a) respectifs.

2. Carter intermédiaire de turbine selon la revendication 1, **caractérisé en ce que** les éléments de paroi extérieure (22, 22') adjacents sont en contact l'un avec l'autre au moyen d'un dispositif d'étanchéité de paroi extérieure (50b) et que les éléments de paroi intérieure (24) adjacents sont en contact l'un avec l'autre au moyen d'un dispositif d'étanchéité de paroi intérieure.

3. Carter intermédiaire de turbine selon la revendication 1 ou 2, **caractérisé en ce que** le dispositif d'étanchéité de carénage (50a) et/ou le dispositif d'étanchéité de paroi extérieure (50b) et/ou le dispositif d'étanchéité de paroi intérieure comprend au moins une bande d'étanchéité (56), la bande d'étanchéité (56) étant de préférence fabriquée sous forme de tuyau tissé en matériaux métalliques et/ou céramiques.

4. Carter intermédiaire de turbine selon la revendication 3, **caractérisé en ce que** la bande d'étanchéité (56) comprend un tuyau tissé avec un rembourrage élastique et/ou déformable, le rembourrage étant de préférence formé de fibres céramiques s'étendant dans le sens longitudinal de la bande d'étanchéité.

5. Carter intermédiaire de turbine selon la revendication 3 ou 4, **caractérisé en ce qu'**au moins un évidement (52a, 52b) associé au dispositif d'étanchéité (50a ; 50b) respectif est formé au niveau des éléments de carénage de support (38) et/ou des éléments de paroi extérieure (22) et/ou des éléments de paroi intérieure (24), évidement dans lequel est logée la bande d'étanchéité (56).

6. Carter intermédiaire de turbine selon la revendication 5, **caractérisé en ce que**, dans la zone d'un évidement (52a, 52b) respectif, une portion de bride (60 ; 60a ; 60b) qui s'y raccorde, est formée au niveau d'au moins un bord de l'évidement (52a, 52b).

7. Carter intermédiaire de turbine selon la revendication 6, **caractérisé en ce que** les éléments de paroi extérieure (22) agencés ensemble au moyen d'un dispositif d'étanchéité de paroi extérieure (50b) sont soutenus les uns contre les autres au moyen des portions de bride (60b) et/ou **en ce que** les éléments de paroi intérieure agencés ensemble au moyen d'un dispositif d'étanchéité de paroi intérieure sont soutenus les uns contre les autres au moyen de portions de bride et/ou **en ce que** les éléments de carénage de support (38) logés entre des éléments de paroi extérieure (22) et des éléments de paroi intérieure (24) correspondants au moyen d'un dispositif d'étanchéité de carénage (50a) sont soutenus au niveau des éléments de paroi extérieure (22) et des éléments de paroi intérieure (24) respectifs au moyen de portions de bride (60a, 48).

8. Carter intermédiaire de turbine selon l'une des revendications précédentes, **caractérisé en ce qu'**entre des éléments de paroi extérieure (22) agencés ensemble et/ou entre des éléments de paroi intérieure (24) agencés ensemble et/ou entre des éléments de carénage de support (38) et leurs éléments de paroi extérieure (22) et éléments de paroi intérieure (24) correspondants, des espaces d'expansion (58a ; 58b ; 58b') sont formés dans la zone du dispositif d'étanchéité de paroi extérieure (50b) ou du dispositif d'étanchéité de paroi intérieure ou du dispositif d'étanchéité de carénage (50a) respectif.

9. Carter intermédiaire de turbine selon l'une des revendications précédentes, **caractérisé en ce que** dans l'espace de logement (46) d'un élément de carénage de support (38), au moins un élément de support (40) dirigé dans l'espace de logement est prévu, de telle sorte que l'élément de carénage de support (38) est soutenu sur l'élement porteur (16) au moyen de l'élément de support (40).

10. Turbine à gaz, en particulier turbine à gaz d'aéronef, comportant un carter intermédiaire de turbine (10) selon l'une des revendications précédentes.
